# NEUE EUROPÄISCHE PATENTSCHRIFT

(11) **EP 0 642 849 B2**
(45) Veröffentlichungstag und Bekanntmachung des Hinweises auf die Entscheidung über den Einspruch: **06.12.2000**
(45) Hinweis auf die Patenterteilung: 04.03.1998
(21) Anmeldenummer: 94113112.0
(22) Anmeldetag: 23.08.1994
(51) Int. Cl.: B09B 3/00, E02D 15/08

(54) **Verwendung von stark entwässerten, ggf. kontaminierten Sedimenten und/oder davon abgetrennten, ggf. kontaminierten Feinsedimenten in Form von Bauelementen zur subaquatischen Auffüllung von trockenzulegenden Gewässern, insbesondere Hafenbecken**
Use of highly drained eventually contaminated fine sediments separated thereof, in the form of building elements for the under water dry filling of waters, especially of harbor basins
Emploi de sédiments fortement asséchés en cas échéant contaminés et/ou de sédiments fins séparés de ceux-ci en cas échéant contaminés sous forme d'éléments de construction pour le remplissage subaquatique des eaux à tarir, notamment des bassins d'un port

(30) Priorität: 15.09.1993 DE 4331364
(43) Veröffentlichungstag der Anmeldung: 15.03.1995
(73) Patentinhaber: NAUE-FASERTECHNIK GMBH & CO. KG, D-32312 Lübbecke (DE); HEINRICH HIRDES GMBH, 20144 Hamburg (DE)
(72) Erfinder: Johannssen, Karsten, Dipl.-Ing., D-32369 Rahden (DE); Müller, Volkard, D-32469 Windheim (DE); Böge, Ernst-Heinrich, D-25436 Tornesch (DE)
(74) Vertreter: Steffens, Joachim, Dr.

(56) Entgegenhaltungen:
- WO-A-92/06801
- DE-A- 3 150 993
- Seiten 1-6 aus Sonderdruck "Wasser und Boden" Heft 1, 24.Jahrgang, Seiten 20-24, Jan 72

## Beschreibung

Die vorliegende Erfindung betrifft die Verwendung von stark entwässerten, gegebenenfalls kontaminierten Sedimenten und/oder davon abgetrennten, gegebenenfalls kontaminierten Feinsedimenten in Form von Bauelementen zur subaquatischen Auffüllung von trockenzulegenden Gewässern, insbesondere Hafenbecken.

Die zur Aufrechterhaltung ausreichender Wassertiefen in Seehäfen notwendigen Ausbaggerungen gehören zu den routinemäßigen Aufgaben einer Hafenverwaltung. Durch die zunehmende Belastung unserer Flüsse und die historische Ansiedlung der großen Seehäfen Europas an den Flüssen (Hamburg an der Elbe, Bremen an der Weser, Rotterdam an der Mündung im Rhein-Delta) wurden zunehmend mit Schadstoffen belastetes Geschiebe und Schwebstoffe durch die Flüsse in diese Hafenbereiche transportiert. Hinzu kamen mit Schadstoffen belastete industrielle Einleitungen aus den Hafenregionen selbst.

Allein in Hamburg werden jährlich mehr als 2 Millionen m³ Sediment (Baggergut) vom Grunde der Hafengewässer ausgebaggert. Der überwiegende Teil besteht dabei aus unbelastetem Sand, der Rest jedoch, und dies sind immerhin noch ca. 900 000 m³, besteht aus kontaminiertem Schlick, der sowohl organische als auch anorganische Schadstoffe enthält. Vor allem Ammonium und Schwermetalle erreichen bedenkliche Konzentrationen.

In Anbetracht dieser Tatsache und unter Berücksichtigung heutiger Umweltschutzgedanken ist es zu Entsorgungsengpässen für das Baggergut gekommen, da das Baggergut nicht ohne weiteres wieder in den Fluß verbracht oder an anderer Stelle abgekippt werden darf. Der Grad der Kontamination läßt in der Regel nur eine Behandlung als Abfall und damit die Deponierung zu. Alle großen Seehäfen haben daher entsprechende Probleme mit der Unterbringung von Baggergut. Rotterdam hat beispielsweise an der See ein großes Becken geschaffen, in das das kontaminierte Baggergut verbracht wird. Bremen verbringt das Baggergut in große Spülbecken.

Die Hansestadt Hamburg ist bereits den Weg gegangen, eine spezielle Hafensedimentaufbereitungsanlage (METHA III) zu bauen und zu betreiben, um die kontaminierten Schlickanteile (Feinsedimente) vom Sand zu trennen. Auf diese Weise wird erreicht, daß nur ein Teil des Baggergutes auf eine Deponie gebracht werden muß. In dem Prospekt "Strom- und Hafenbau METHA III" der Hansestadt Hamburg wird diese Aufbereitung wie folgt beschrieben:

Das ausgebaggerte Hafensediment (Baggergut) wird mit Hilfe von Schuten angeliefert und zunächst von groben Fremdstoffen befreit. Das nach der Grobkornabscheidung anfallende feinkörnige Sediment wird anschließend einer zweistufigen Trennanlage zugeführt, in der eine Hydroklassierung und Aufstromsortierung vorgenommen wird.

In der ersten Trennstufe, d.h. der Hydroklassierung, werden die Feinsedimente (kleiner als 63 mµ) zusammen mit den daran anhaftenden Schadstoffen weitgehendst vom Sand getrennt. Der Sand mit Restanteilen von Feinsedimenten wird anschließend der zweiten Trennstufe, d.h. der Aufstromsortierung, zugeführt. Dort werden die restlichen Feinsedimente durch Zugabe von Aufstromwasser ausgeschwemmt und zusammen mit den Feinsedimenten aus der Hydroklassierung zur Eindickung weitergeleitet. Der aus der Sortierung ausgetragene Reinsand wird mit Hilfe eines Entwässerungssiebes auf ca. 85 % Trockenanteil entwässert und aus der Anlage zur weiteren Verwendung als Baumaterial über Förderbänder ausgetragen.

Die feine Schlicksuspension, die aus Gründen einer effizienten Trennung einen sehr hohen Wasseranteil enthält, wird zunächst unter Zugabe von Flockungsmitteln auf höhere Feststoffanteile eingedickt und schließlich mittels einer Siebbandpresse und einer Hochdruck-Nachentwässerungspresse zu einem Schlickkuchen entwässert, der dann auf einem Deponiegelände in Form eines Schlickhügels abgelagert wird. Hierzu steht zur Zeit die Deponie Frankopp zur Verfügung, die wie eine normale Deponie abgedichtet ist. Sonderprobleme bereitet allerdings die Standfestigkeit des abgelagerten Schlickkuchens, der von Natur aus schlechte bodenmechanische Eigenschaften und damit nur geringe Eigenstandsfestigkeiten, selbst bei der in METHA III erlangten Entwässerungsstufe, aufweist. Hinzu kommt, daß weitere Deponieflächen nur in sehr begrenztem Maße zur Verfügung stehen und der Deponiebetrieb sehr kostenintensiv ist, da die Deponien praktisch für alle kommenden Zeiten überwacht und unterhalten werden müssen. Eine andere Entsorgungsmöglichkeit des Baggergutes selbst oder des davon abgetrennten kontaminierten Hafenschlicks wäre erstrebenswert. Das gleiche gilt beispielsweise für das Baggergut aus Flüssen und für sedimentierte Industrie- und Klärschlämme.

Ein weiteres Problem, mit dem die Hafenbehörden zu kämpfen haben, ist in der Neustrukturierung der Hafenanlagen zu sehen. Anstelle einer Vielzahl kleiner Hafenbecken mit angrenzenden Lagergebäuden, die früher benötigt wurden, treten heute nur einige, aber dafür große Hafenbecken, die von großen Containerschiffen angelaufen werden können und die mit direkt angrenzenden großen Container-Lagerflächen und entsprechenden Lagerhallen in Verbindung stehen sollten bzw. müssen. Um diesem Trend zu folgen, ist es notwendig, eine Vielzahl der kleinen Hafenbecken aufzufüllen, um den erforderlichen Baugrund zur Verfügung stellen zu können. Da weder der kontaminierte Hafenschlamm, noch der daraus separierte "schlammige" Hafenschlick bzw. der "lose" Schlickkuchen zum Verfüllen der kleinen Hafenbecken benutzt werden kann (Standfestigkeit) bzw. darf (Kontaminierung), ist die kostenaufwendige Verfüllung der kleinen Hafenbecken mit teurem Sand oder anderen, nicht mit Schadstoffen belasteten Materialien notwendig.

Ausgehend von den beiden vorstehend beschriebenen Tatsachen, nämlich, daß einerseits das kontaminierte Baggergut bzw. der davon abgetrennte kontaminierte Hafenschlick nur auf Deponien endgelagert werden darf und andererseits ein Bedarf von preiswerten Materialien zum Verfüllen der kleinen Hafenbecken oder anderer Gewässer besteht, liegt der vorliegenden Erfindung die Aufgabe zugrunde, einen Weg zu finden, der es gestattet, Baggergut bzw. Hafenschlick, insbesondere in kontaminierter Form, sowie sedementierte Industrie- und Klärschlämme zum Verfüllen von kleinen Hafenbecken oder anderen Gewässern einzusetzen.

Gelöst wird diese Aufgabe gemäß der vorliegenden Erfindung dadurch, daß man in starkem Maße entwässerte, gegebenenfalls kontaminierte Sedimente, beispielsweise die als Baggergut anfallenden Hafensedimente und/oder den davon abgetrennten, gegebenenfalls kontaminierten Hafenschlick, unter Druck, vorzugsweise unter weiterer Entwässerung, zu einem Formkörper verpreßt, diesen mit einer verformbaren, wasserdurchlässigen Verpackungshülle allseitig umgibt und das so erhaltene Bauelement zur subaquatischen Auffüllung von Hafenbecken oder anderen Gewässern verwendet.

Gegenstand der vorliegenden Erfindung ist somit die Verwendung von durch Verpressen weitgehendst entwässerten, gegebenenfalls kontaminierten Sedimenten und/oder davon abgetrennten Feinsedimenten in Form von Bauelementen, die aus verpreßten Formkörpern bestehen, die von einer Verpackungshülle umgeben sind, zur subaquatischen Auffüllung von trockenzulegenden Gewässern, insbesondere von Hafenbecken.

Zu den erfindungsgemäß einsetzbaren Sedimenten gehören vorzugsweise Ablagerungen in natürlichen oder künstlichen Gewässern, z.B. Baggergut aus Häfen und Flüssen sowie die gegebenenfalls davon abgetrennten Feinsedimente (Schlick) und sedimentierte Industrie- und Klärschlämme. Die Industrieschlämme umfassen dabei auch Flugasche in aufgeschlämmter Form.

Die zur subaquatischen Auffüllung von trockenzulegenden Gewässern, insbesondere von Hafenbecken, einzusetzenden Bauelemente bestehen gemäß der vorliegenden Erfindung aus einem durch Verpressen stark verdichteten, in hohem Maße entwässerten, homogenen Formkörper aus Sediment, insbesondere aus Baggergut und/oder davon abgetrenntem Hafenschlick, der allseitig mit einer verformbaren, wasserdurchlässigen Verpackungshülle umgeben ist. Die Verpackungshülle besteht vorzugsweise aus Textilien, z.B. einem Vliesstoff. Insbesondere ist die aus Vliesstoff bestehende Verpackungshülle als Verbundstoff aufgebaut und dient gleichzeitig als Schadstoff-Filter. Zu diesem Zweck besteht die Verpackungshülle aus einem vernadelten, vernähten und/oder nähgewirkten Vliesstoff- Vliesstoff-Verbund oder einem Gewebe-Vliesstoff-Verbund, bei dem zwischen den beiden textilen Schichten ein oder mehrere Schadstoffe absorbierende und/oder adsorbierende Materialien eingelagert sind.

Gemäß einer besonderen Ausführungsform der vorliegenden Erfindung sind die Hohlräume bzw. die Zwischenräume zwischen den Fasern der textilen Schichten ganz oder teilweise mit Baggergut, Hafenschlick oder einem anderen Tonmineral ausgefüllt. Um beim Transport ein Ausstauben der in der Umhüllung befindlichen Materialien zu vermeiden, hält man die Außenhülle entweder feucht oder versiegelt sie ganzflächig mit einem wasserlöslichen Klebstoff.

Die Verpackungshülle umschließt gemäß der vorliegenden Erfindung den Formkörper vorzugsweise enganliegend. Der Formkörper selbst besteht gemäß der vorliegenden Erfindung vorzugsweise aus kontaminiertem Baggergut oder aus davon abgetrenntem, kontaminiertem Hafenschlick, wie er bei der Separierung gemäß dem METHA-III-Verfahren anfällt.

Die erfindungsgemäßen Bauelemente sind vorzugsweise großvolumige Bauelemente mit möglichst geringer entsprechender Oberfläche. Sie haben vorzugsweise die Form eines Zylinders mit einem Durchmesser von 1,25 m und einer Länge von 5 m.

Bei der Herstellung der erfindungsgemäßen Bauelemente geht man so vor, daß man einen durch Verpressen vorentwässerten Sedimentkuchen, vorzugsweise einen Kuchen aus Baggergut und/oder davon abgetrennten Hafenschlick, unter Druckeinwirkung, vorzugsweise unter gleichzeitiger weiterer Entwässerung zu einem Formkörper verpreßt und den erhaltenen Formkörper mit einer verformbaren, wasserdurchlässigen Verpackungshülle allseitig umgibt. Die Formgebung des Kuchens, bei der gegebenenfalls eine weitere Entwässerung durchgeführt wird, erfolgt vorzugsweise mit einer Kolbenpresse oder mit einer anderen hydraulisch arbeitenden Presse. Dabei geht man vorzugsweise gemäß der vorliegenden Erfindung so vor, daß man den Formkörper direkt in die Verpackungshülle preßt. Selbstverständlich kann man die Verpackungshülle aber auch durch spiraliges Einwickeln mit einem endlosen Vliesstoff-Verpackungsstreifen und anschließendem Verkappen der Enden des Formkörpers oder durch Einnähen etc. herstellen.

Gemäß einer weiteren bevorzugten Ausführungsform der vorliegenden Erfindung unterwirft man die den Formkörper umschließende Verpackungshülle einem thermischen Schrumpfprozeß. Vor dem Schrumpfprozeß kann die schrumpfbare Verpackungshülle den Formkörper lose umgeben oder aber bereits enganliegend umschließen.

Zur Durchführung des erfindungsgemäßen Verfahrens bedient man sich vorzugsweise einer mit einer Verpackungsumhüllungseinrichtung versehenen Kolbenpresse, dessen Preßzylinder einerseits mit einem Einfülltrichter für den vorentwässerten Kuchen und andererseits mit einem Reduzierstück, d.h. einem sich verengenden Kanal, versehen ist, wobei das Reduzierstück mit einem formgegebenden Rohr (Formrohr) verbunden ist, aus dem der verdichtete, in die gewünschte Form gepreßte Formkörper endlos austritt. Das Reduzierstück der Kolbenpresse ist vorzugsweise konisch ausgebildet. Gemäß einer weiteren Ausführungsform der vorliegenden Erfindung ist das Reduzierstück mit Einrichtungen zum Austreten des ausgepreßten Wassers versehen. Derartige Einrichtungen können spezielle Dichtungen zwischen den Anschlußflanschen oder poröse Filtereinheiten sein, die sich in den Wandungen des Reduzierstückes befinden.

Da die Schadstoffe an den Ton- und Schluffpartikeln des Schlicks angelagert sind und nur bei entsprechender äußerer Erosion und/oder über Ionenaustausch wieder freigesetzt werden können, werden gemäß der vorliegenden Erfindung, aus dem weitgehend entwässerten Baggergut oder vorzugsweise aus dem davon abgetrennten Hafenschlick der METHA-III-Anlage großvolumige Formkörper gepresst. Diese speziell verpackten Formkörper werden dann als Bauelement zur Verfüllung alter Hafenbecken eingesetzt. Hierdurch wird das Baggergut bzw. der Hafenschlick dorthin zurückgebracht, wo sie herkommen, nämlich in die Gewässer der Hafenbereiche. Das durch die Entwässerung und durch die Verpackungshülle vorverfestigte Hafensediment bzw.der davon abgetrennte Hafenschlick kann somit zur Verfüllung alter Hafenbecken genutzt werden, um die heute benötigten großen Lagerflächen in den Stückgutumschlagshäfen mit Containerbetrieb zu schaffen. Eine solche Lösung ist besonders wirtschaftlich, denn die Verfüllung der Hafenbecken muß zur Schaffung der Freiflächen ohnehin erfolgen. Außerdem spart man die kostenspielige Deponierung.

Das entsprechend entwässerte Baggergut bzw. der davon abgetrennte Hafenschlick wird also zu Bauelementen geformt, die transport-, erosions- und immisionssicher verpackt und gehändelt werden, um dann gezielt unter Wasser gelagert zu werden. Die Vielzahl der eingebrachten, kontrolliert abgesetzten Bauelemente bildet dann einen monolithischen Körper, der wegen der geringen Durchlässigkeit des Schlicks und der speziellen Eigenschaften der Verpackung nicht durchströmt werden kann, so daß die Schadstoffe langfristig in dem sich bildenden monolithischen Schlickkörper immobil gelalagert werden und nicht in die das Grundwasser umgebende Bodenschichten oder in freie Gewässer ausgetragen werden können.

Gemäß der vorliegenden Erfindung sind somit zunächst entsprechende Formkörper aus dem Sediment, vorzugsweise aus dem Baggergut (Hafensediment) bzw. dem davon abgetrennten Hafenschlick, zu formen. Der Formkörper ist vorzugsweise ein Zylinder mit senkrechten Enden, wobei der Zylinder wie eine Schrumpfwurst eingepackt werden kann, bei der beispielsweise die Enden zunächst wie Wurstpelle zusammengefaßt und dann in die Enden des Formkörpers eingedrückt werden, so daß ein Zylinder ohne überstehende Verpackungsenden entsteht. Die Verpackung wiederum umschließt vorzugsweise stramm anliegend diesen zylindrisch geformte Formkörper. Andere Formen des Formkörpers sind z.B. Quader oder Kugeln.

Bei der Formgebung des Formkörpers wird Verdichtungsarbeit geleistet, die gegebenenfalls zu einer weiteren Entwässerung des Sediment- bzw. Schlickkuchens z.B. durch ringförmige Entwässerrungselemente am Konus, führt, wodurch zusammen mit der Verpackungshülle die Tragfähigkeit des Formkörpers weiter erhöht wird. Die Verpackungshülle selbst muß verformbar und wasserdurchlässig sein, um spätere Konsolidierungsprozesse des Formkörpers zu erlauben. Die Bauelemente werden zur Auffüllung der Hafenbecken unter Wasser abgelagert und übereinander gestapelt sowie später mit anderen Auflasten, z.B. Sand, versehen. Diese Auflasten führen zu einer weiteren Konsolidierung des gesamten Baukörpers durch Auspressen von Porenwasser, bis ein Abtragen der aufgebrachten Auflasten durch das Korngerüst des Sediment- bzw. Schlickgefüges möglich wird. Das ausgepreßte Porenwasser muß dabei über die Verpackungshülle entweichen können, wobei die Verpackungshülle, wie bereits ausgeführt, vorzugsweise mit Schadstoffe absorbierenden bzw. adsorbierenden Materialien ausgerüstet ist, so daß das Porenwasser wie über einen Schadstoffilter ausströmt und nur schadstoffgereinigtes Porenwasser in die Umgebung gelangt. Die die Schadstoffe absorbierenden bzw. adsorbierenden Materialien können entsprechend der im Sediment bzw. im Schlick vorhandenen Schadstoffe ausgewählt werden (z.B. Bentonite, Zeolithe, Aktivkohle, organophillierte Bentonite usw.).

Der Formkörper wird vorzugsweise mittels einer diskontinuierlich arbeitenden Presse, beispielsweise mit einer Presse mit beweglichem Kolben (Kolbenpresse) geformt, wobei jedoch der Austritt aus dem Mundstück endlos ist. Das Ablegen des Formkörpers auf einer anschließenden Halbschale ist eine Möglichkeit, wobei die Verpackung vor der Ablage erfolgen kann. Die Formkörper können aber auch auf Förderbändern oder Rollenleitern gefördert und abgelegt werden.

Die Hauptverfahrensschritte sind letztlich das Einbringen des vorentwässerten Sediments und/oder des davon abgetrennten Schlickkuchens in den Trichter, Verdichten unter Formgebung, Abzug der Formkörper hinter der Presse und schließlich das Einpacken der Formkörper in eine stramm sitzende Hülle, die ein Entwässern unter Auflast erlaubt und die die Schadstoffe zurückhält. Auch beim Einpacken ist zu beachten, daß als alternative Verpackungsmöglichkeiten Endloswickeln, Umschlagen, Einschlagen, Hineinschieben in einen Schlauch in Frage kommen.

Beim Verpacken wendet man die üblichen Verbindungstechniken an wie z.B. Schweißen, Nähen und Kleben, aber auch die Anwendung von Hakengummibändern (wie beim Verband) oder Klettbändern ist möglich.

Die erfindungsgemäßen Bauelemente sollen unter Wasser eine möglichst dicke Packung in Form eines monolithischen Gesamtkörpers ergeben, was mit entsprechenden, z.B. lasergesteuerten, Verlegeeinheiten, errreicht wird. Unter dem Eigengewicht der übereinander gestapelten erfindungsgemäßen Bauelemente und durch zusätzliche Auflasten mit nicht kontaminiertem Material sollen sich die Bauelemente so deformieren und anpassen, daß keine Zwischenräume verbleiben, in denen Wasser vagabundieren kann und in denen Schadstoffe eroiert werden können. Auf diese Weise wird somit ein monolithischer Gesamtkörper aufgebaut, in dem die Schadstoffe sicher aufgehoben, d.h. immobil eingekapselt sind und demgemäß nicht entweichen können. Mit anderen Worten, die Schadstoffe sind immobilisiert.

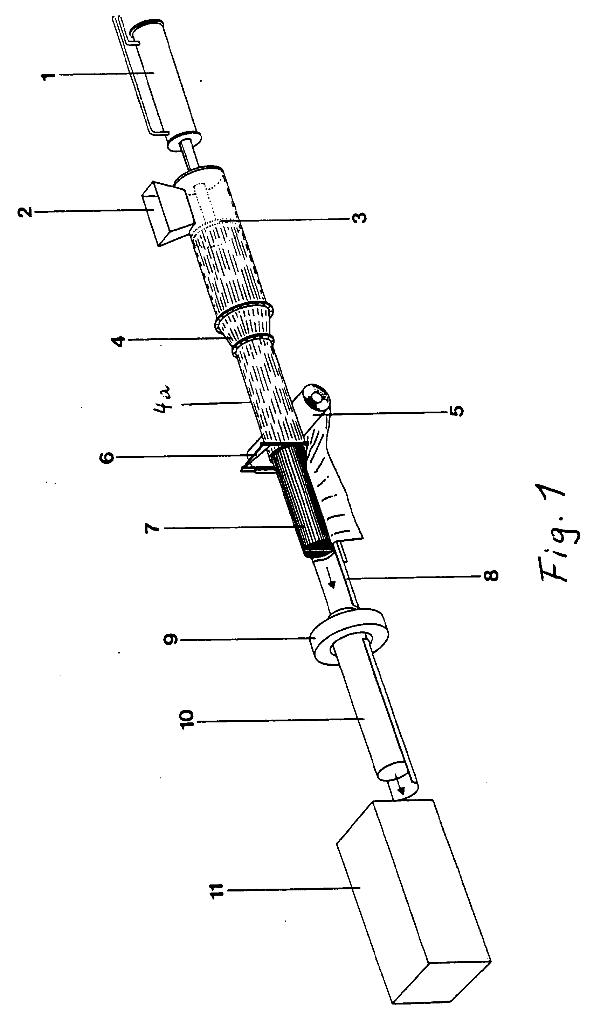

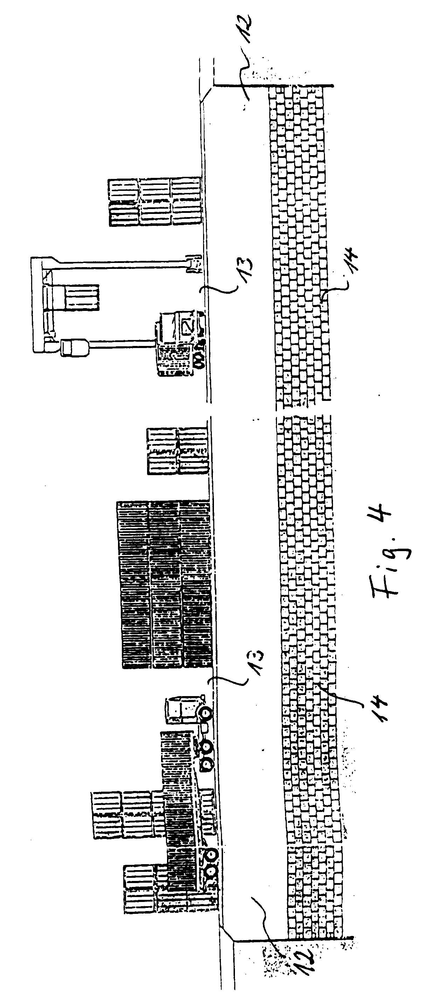

Die Erfindung wird weiterhin anhand der Fig. 1 bis 4 erläutert, die bevorzugte Ausführungsformen darstellen, ohne sie jedoch darauf zu beschränken. Alle aus den Fig. ersichtlichen Details gehören mit zur erfindungswesentlichen Offenbarung.

In den Fig. 1 bis 4 haben die Bezugszeichen folgende Bedeutung:
- 1: Hydraulischer Antrieb
- 2: Einfülltrichter für den vorentwässerten Kuchen
- 3: Preßzylinder
- 4: Reduzierstück
- 5: Vliesstoff-Vorratsrolle
- 6: Strangtrennvorrichtung
- 7: Formkörper
- 8: Stützkonstruktion für Formkörper in Form einer "Halbschale"
- 9: Hitzering zum Schrumpfen der Verpackungshülle
- 10: Bauelement
- 11: Transportcontainer
- 12: Auflastverfüllungsmaterial, das den oberen Teil des gebildeten Baugrundes bildet
- 13: befahrbares und bebaubares Lagergelände

- Fig. 1: zeigt in schematischer Darstellung die Herstellung der erfindungsgemäßen Bauelemente 10 mittels einer Kolbenpreßanlage.
- Fig. 2: zeigt in schematischer Darstellung die subaquatische Ablagerung der erfindungsgemäß hergestellten Bauelemente 10 in einem durch Auffüllung trockenzulegenden Hafenbecken.
- Fig. 3: zeigt in schematischer Darstellung, wie die in einem durch Auffüllung trockenzulegenden Hafenbecken subaquatisch ablagerten Bauelemente 10 der unteren Schichten durch die die Auflast der darüber abgelagerten Bauelemente 10 beginnen durch Verformung einen monolithischen Gesamtkörper zu bilden.
- Fig. 4: zeigt in schematischer Darstellung, wie aus den erfindungsgemäß abgelagerten Bauelementen 10 durch die Auflast ein monolithischer Gesamtkörper 14 gebildet wurde, auf dem sich als weiteres Auflastverfüllungsmaterial 12 nicht kontaminiertes Erdmaterial, z.B. Kies, befindet, das den befahrbaren und bebaubaren Baugrund für Containerhallen, Freiflächen usw. bildet.

Bei der in Fig. 1 dargestellten Kolbenpreßanlage ist der Preßzylinder 3 vorzugsweise so dimensioniert, daß die darin Platz findende zu verpressende Materialmenge volumenmäßig dem Volumen des bei einem Gesamtkolbenhub austretenden Formkörpers 7 entspricht. Die Füllung des Preßzylinders 3 erfolgt dabei zunächst schrittweise unter einem Druck, der nur so groß ist, um das Material im Preßzylinder zusammenzuschieben, bis die entsprechende Volumenmenge erreicht ist, ohne daß ein Teil des Formkörpers 7 aus dem Formrohr 4a heraustritt. Erst nach vollständiger Füllung des Preßzylinders 3, d.h. bis das gewünschte Volumen erreicht ist, erfolgt das Auspressen des gesamten Formkörpers 7 "auf einen Schlag". Die Innenvolumina des Reduzierstücks 4 und des Formrohres 4a sind bei dieser bevorzugten Ausführungsform gleich dem Volumen des austretenden Formkörpers 7. Auf diese Weise wird die Bildung von Preßfugen zwischen jeder Auspreßcharge vermieden. Der austretende Formkörper 7 soll so homogen und dicht wie möglich sein und keine Risse, Lufteinschlüsse oder andere Wasserwegigkeiten aufweisen. Der Grad der Verdichtung kann beliebig durch eingebaute Reduzierstücke 4 (Querschnittsreduzierung) gewählt werden. Um eine möglichst dichte Oberfläche zu erhalten, muß sowohl das Reduzierstück 4 wie auch das Formrohr 4a eine sehr stark geglättete Innenoberfläche aufweisen. Nur so kann das durch den Druck nach außen austretende Porenwasser, das zwischen der inneren Oberfläche des Formrohres 4a und der Oberfläche des auszupressenden Formkörpers 7 einen Wasserfilm bildet, die Oberfläche des Formkörpers schließen und die Einzelpartikel binden.

Die Ablängung des aus dem Formrohr 4a austretenden Formkörpers 7 erfolgt dann mittels der Strangtrennvorrichtung 6 im Bereich der Preßfuge.

Beim Austreten des Formkörpers aus dem Formrohr 4a kommt er auf dem auf der Halbschale 8 liegenden Vliesstoff zum Aufliegen. Bedingt durch das Eigengewicht des Formkörpers zieht er den Vliesstoff mit sich mit. Der zur Umhüllung dienende Vliesstoff bildet dabei gleichzeitig die Gleitbahn zwischen Formkörper 7 und Halbschale 8, die das Gleiten des Formkörpers 7 zusammen mit dem Vliesstoff auf der Halbschale 8 gestattet. Die Vliesstoff-Vorratsrolle ist unterhalb des Formrohres 4a angeordnet. Die Breite der Vliesstoff-Bahn entspricht dem Umfang des Formkörpers 7 plus Materialzugabe für eine Überlappung der Längskanten, um eine Verschweißung oder Vernähung an der Überlappung vornehmen zu können. Vorzugsweise erfolgt das Verschweißen der Überlappung mit einem Heißluftschweißgerät. Die Stirnseiten des Formkörpers sind durch das Abschneiden mit einem Stahldraht der Strangtrennvorrichtung 6 planeben und werden mit Vliesstoffkappen versehen. Zu diesem Zweck werden runde Vliesstücke, die an den Kanten 20 cm umgeschlagen werden können, auf die Stirnflächen gelegt. Dies erlaubt ein Verschweißen mit der seitlichen Vliesstofflage.

Anstelle des Verschweißens oder Vernähens der Längsnaht kann man aber auch den Überlappungsbereich in Längsachse des Formkörpers vernadeln. Hierbei ist es mittels entsprechender Vorrichtungen bereits möglich, die Vliesstoffumhüllung so anzubringen, daß sie den Formkörper bereits relativ enganliegend umgibt, so daß für diesen Fall normale Vliesstoffe Anwendung finden können, die keine Schrumpfeigenschaften zu besitzen brauchen. Im Falle des Einsatzes von Schrumpf-Vliesstoffen kann die Verpackungshülle zunächst den Formkörper relativ schlaff, d.h. nicht enganliegend, umschließen, da beim anschließenden thermischen Schrumpfprozeß die stramme, d.h. enganliegende Umhüllung erreicht wird. Zu diesem Zweck führt man dann den "schlaff" eingepackten Formkörper durch den Hitzering 9, der mit einem Gasbrenner oder Infrarotstrahlungsgeräten oder dergleichen ausgerüstet ist. Hierbei treten Schrumpfmaße von ca. 50% auf, die sich nach dem Abkühlen stabilisieren.

Der Schrumpf-Vliesstoff besteht vorzugsweise aus einer Mischung aus Schmelzfasern und verstreckten, hochfesten Fasern. Die Schmelzfasern können z.B. unverstreckte Polyesterfasern sein, die bei einer Temperatur von ca. 100° C zu schmelzen beginnen. Das verstreckte Fasermaterial weist hingegen einen höheren Schmelzpunkt auf (z.B. Polyamid 210° C, Polyester 250° C). Der Einsatz von ausschließlich Schmelzfasern sowie der Einsatz von Bikomponentenfasern (Kernmantelfasern) ist ebenfalls möglich. Bei den Bikomponentenfasern kann z.B. der Mantel der Fasern aus Polyamid und der Kern der Fasern aus Polyester bestehen. Ferner können die Schrumpfvliesstoffe auch aus Mischungen der obengenannten Fasermaterialien oder ähnlichen Rohstoffen bestehen.

Die Flächenmaße der normalen Vliesstoffe wie der Schrumpf-Vliesstoffe können zwischen 100 g/m² bis zu 4000 g/m² betragen. Vorzugsweise werden Vliesstoffe mit einem Flächengewicht von 250 g/m² bis 1000 g/m² verwendet.

Die fertigen Bauelemente 10 werden von der Halbschale 8 in einen speziellen Transportcontainer geschoben, der eine Art Magazin für eine entsprechende Anzahl von Bauelementen 10 aufweist. Es handelt sich um Wechselcontainer, die sowohl auf einem Lkw wie auch auf den Eisenbahn oder dem Schiff transportiert werden können. Durch die den Formkörper allseitig umgebende Verpackungshülle können keine Schadstoffe während des Transports entweichen.

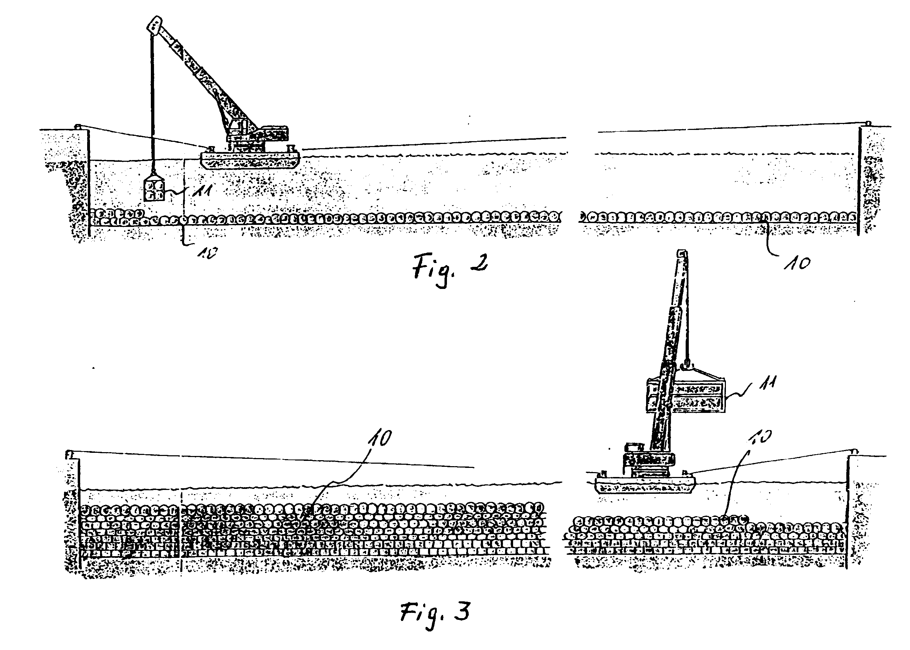

Die Fig. 2 bis 4 zeigen, wie am Einbauort, dem Hafenbecken, der Container vom Transportgerät mit einem entsprechenden Kran gehoben und direkt auf der Sohle des Beckens eingemessen und abgestellt wird. Durch Wegklappen der Lagerschale im Container fallen die einzelnen Bauelemente nebeneinander auf den Grund, d.h. nach Anheben des Containers fallen die "Würste" selbständig in eine geordnete Lage mit optimaler Lagerdichte.

Der Grad der Einpackung, des Verpressens und des Restwassergehaltes im Formkörper sind ausschlaggebend für die Verformung der erfindungsgemäßen Bauelemente 10, um einen kompakten monolithischen Gesamtkörper zu formen. Es sollen sowohl aus ökologischer Sicht keine Sickerwege für Fremdwasser wie aus bautechnischer Sicht keine leeren Zwickel und dergleichen bleiben.

Langfristige Setzungen können zeitlich und geometrisch nur gering beeinflußt werden. Falls jedoch zwecks einer schnelleren Konsolidierung (schnelles Austreten des Porenwassers) z.B. Senkrechtdräns (Vertikaldräns) vorzusehen sind, können diese mit herkömmlicher Technik als Geotextildräns durch die Schichten hindurchgestochen werden. Die Filterschichten des Senkrechtdräns sind vorzugsweise als Schadstoff-Filter ausgebildet. Nach Abklingen der Setzungen müssen dann diese Dräns mit Bentonitgemischen verpreßt werden, um einen Schadstoffaustritt langfristig durch diese Sickerwege zu verhindern.

## Patentansprüche

1. Verwendung von durch Verpressen weitgehendst entwässerten, gegebenenfalls kontaminierten Sedimenten und/oder daraus abgetrennten, gegebenenfalls kontamiminierten Feinsegmenten bzw. Schlick in Form von Bauelementen, die aus verpreßten Formkörpern bestehen, die von einer Verpackungshülle umgeben sind, zur subaquatischen Auffüllung von trockenzulegenden Gewässern, insbesondere von Hafenbecken.

2. Verwendung nach Anspruch 1, dadurch gekennzeichnet, daß man als Sediment Ablagerungen in natürlichen oder künstlichen Gewässern, sedimentierte Industrie- und Klärschlämme oder Gemische davon einsetzt.

3. Verwendung nach Anspruch 1 und 2, dadurch gekennzeichnet, daß man als Sediment Baggergut aus Häfen und/oder Flüssen und/oder die davon abgetrennten Feinsedimente bzw. den Hafen- oder Flußschlick einsetzt.

4. Bauelement nach Anspruch 1 bis 3 zur subaquatischen Auffüllung von trockenzulegenden Gewässern, insbesondere Hafenbecken, dadurch gekennzeichnet daß es aus einem durch Verpressen stark verdichteten, in hohem Maße entwässerten, homogenen Formkörper (7) aus gegebenenfalls kontaminierten Sedimenten oder daraus abgetrennten, gegebenenfalls kontaminierten Feinsedimenten besteht, der allseitig mit einer verformbaren, wasserdurchlässigen Verpackungshülle umgeben ist.

5. Bauelement nach Anspruch 4, dadurch gekennzeichnet daß die Verpackungshülle aus einem Textil, vorzugsweise einem Vliesstoff besteht.

6. Bauelement nach Anspruch 4, dadurch gekennzeichnet, daß die Verpackungshülle ein Schadstoff-Filter ist, der aus einem vernadelten, vernähten und/oder nähgewirkten Vliesstoff-Vliesstoff-Verbund oder einem Gewebe-Vliesstoff-Verbund besteht, bei dem zwischen den beiden textilen Schichten ein oder mehrere Schadstoffe absorbierende und/oder adsorbierende Materialien eingelagert sind.

7. Bauelement nach Anspruch 5 oder 6 , dadurch gekennzeichnet, daß die Hohlräume bzw. die Zwischenräume zwischen den Fasern der textilen Schichten ganz oder teilweise mit Sedimenten, Schlick, einem Tonmineral oder die Schadstoffe ab- und/oder adsorbierenden Materialien ausgefüllt sind.

8. Bauelement nach Anspruch 7, dadurch gekennzeichnet, daß die ganz oder gefüllten textilen Schichten feucht gehalten oder mit einem wasserlöslichen Klebstoff auf der nach außen hin zu liegen kommenden Seite oder auf beiden Seiten ganzflä-chig versiegelt sind.

9. Bauelement nach Anspruch 4 bis 8, dadurch gekennzeichnet, daß die Verpackungshülle den Formkörper (7) enganliegend umschließt,

10. Bauelement nach Anspruch 4 bis 9, dadurch gekennzeichnet, daß der Formkörper(7) aus kontaminiertem Baggergut und/oder davon abgetrenntem kontaminiertem Schlick besteht.

11. Bauelement nach Anspruch 4 bis 10, dadurch gekennzeichnet, daß es die Form eines Zylinders hat, vorzugsweise mit einem Durchmesser von 1,25 m und einer Länge von 5 m.

12. Verfahren zur Herstellung der Bauelemente nach Anspruch 4 bis 11, dadurch gekennzeichnet, daß man einen durch Verpressen erhaltenen Sediment- und/oder einen Feinsedimentkuchen unter Druckeinwirkung, vorzugsweise unter weiterer Entwässerung, zu einem Formkörper (7) presst und den erhaltenen Formkörper (7) mit einer verformbaren, wasserdurchlässigen Verpackungshülle allseitig umgibt.

13. Verfahren nach Anspruch 12, dadurch gekennzeichnet, daß das Formpressen des Kuchens mittels einer Kolbenpresse oder einer anderen hydraulisch arbeitenden Großpresse erfolgt.

14. Verfahren nach Anspruch 12 und 13, dadurch gekennzeichnet, daß man den Formkörper (7) direkt in die Verpackungshülle presst.

15. Verfahren nach Anspruch 12, dadurch gekennzeichnet, daß man die Verpackungshülle durch spiraliges Einwickeln mit einem endlosen Vliesstoffstreifen und anschließendem Verkappen der Enden des Formkörpers (7) erzeugt.

16. Verfahren nach Anspruch 12 bis 15, dadurch gekennzeichnet, daß man die den Formkörper (7) umschließende Verpackungshülle einem thermischen Schrumpfprozeß unterwirft.

17. Vorrichtung zur Durchführung des Verfahrens nach Anspruch 12 bis 16, dadurch gekennzeichnet daß sie eine mit einer Verpackungsumhüllungseinrichtung versehene Kolbenpresse darstellt, dessen Preßzylinder (3) einerseits mit einem Einfülltrichter (2) für den Sediment- oder Feinsedimentkuchen und andererseits mit einem Reduzierstück (4) versehen ist, wobei das Reduzierstück (4) mit einem Formrohr (4a) verbunden ist.

18. Vorrichtung nach Anspruch 17, dadurch gekennzeichnet, daß das Reduzierstück (4) konisch ausgebildet ist.

19. Vorrichtung nach Anspruch 17 und/oder 18, dadurch gekennzeichnet, daß das Reduzierstück (4) mit Einrichtungen zum Austreten des ausgepreßten Wassers versehen ist.

## Claims

1. Use of by pressing extensively drained, if necessary contaminated sediments and/or if necessary contaminated fine segments or silt separated therefrom in the form of constructive members, which comprise compressed moulded bodies, surrounded by a packaging wrapping, for submarine filling of bodies of water to be dried out, particularly harbour basins.

2. Use according to claim 1, characterised in that sedimented industrial and slurry muds, or mixtures thereof are used as sediment deposits in natural or artificial bodies of water.

3. Use according to claims 1 and 2, characterised in that there is used as sediment excavator material from harbours and/or rivers and/or the fine sediment separated therefrom or the harbour or river silt.

4. Constructive member according to claims 1 to 3, for submarine filling of bodies of water to be dried out, particularly harbour basins, characterised in that it comprises an by pressing intensely condensed to a large degree drained, homogeneous moulded body (7) made of if necessary contaminated sediment or fine sediments if necessary contaminated, separated therefrom, which is surrounded on all sides with a deformable water-permeable packaging wrapping.

5. Constructive member according to claim 4, characterised in that the packaging wrapping comprises a textile, preferably a nonwoven material.

6. Constructive member according to claim 4, characterised in that the packaging wrapping is a contaminant filter, which comprises a needled, stitched and/or stitch-bonded nonwoven/nonwoven composite or a textile/nonwoven composite, in which there are incorporated between the two textile layers one or a plurality of materials absorbing and adsorbing contaminants.

7. Constructive member according to claim 5 or 6, characterised in that cavities or the interspaces between the fibres of the textile layers are entirely or partly filled with sediments, silt, mineral clay or materials absorbing and/or adsorbing contaminants.

8. Constructive member according to claim 7, characterised in that the entirely or partly filled textile layers are kept moist or are sealed over the entire surface with a water-soluble adhesive on the side coming to lie outwards, or on both sides.

9. Constructive member according to claims 4 to 8, characterised in that the packaging wrapping surrounds the moulded body (7) conforming closely thereto.

10. Constructive member according to claims 4 to 9, characterised in that the moulded body (7) comprises contaminated excavated material and/or contaminated silt separated therefrom.

11. Constructive member according to claims 4 to 10, characterised in that it has the shape of a cylinder, preferably with a diameter of 1.25 m and a length of 5 m.

12. Method of manufacturing the constructive members according to claims 4 to 11, charcterised in that a sediment and/or a fine sediment cake obtained by pressing is pressed, preferably with further water removal, to form a moulded body (7) and the moulded body (7) obtained is surrounded on all sides by a deformable, water-permeable packaging wrapping.

13. Method according to claim 12, characterised in that the pressing of the cake is effected by means of a piston press or another hydraulically operating large-scale press.

14. Method according to claim 12 and 13, characterised in that the moulded body (7) is pressed directly into the packaging wrapping.

15. Method according to claim 12, characterised in that the packaging wrapping is produced by spiral winding with an endless nonwoven strip and subsequent capping of the ends of the moulded body (7) .

16. Method according to claims 12 to 15, characterised in that the packaging wrapping surrounding the moulded body (7) is subjected to a thermal shrinkage process.

17. Device for carrying out the method according to claims 12 to 16, characterised in that it presents a piston press provided with a packaging wrapping device, and the compression cylinder (3) of which is connected on the one hand to a filling hopper (2) for the sediment or fine sediment cake, and on the other hand is provided with a tapering section (4), the tapering section (4) being connected to a shaping tube (4a).

18. Device according to claim 17, characterised in that the tapering section (4) is conical in shape.

19. Device according to claim 17 and/or 18, characterised in that the tapering section (4) is provided for devices for emergence of the expelled water.

## Revendications

1. Utilisation de sediments par pression fortement asséchés le cas échéant contaminés et/ou de sédiments fins ou de limon séparés de ceux-ci le cas échéant contaminés sous forme d'éléments de construction, qui se composent de corps moulés comprimés qui sont entourés d'une enveloppe d'emballage et destinés au remplissage subaquatique des eaux à tarir, en particulier des bassins de port.

2. Utilisation selon la revendication 1,
caractérisée en ce qu'
on met en place comme sédiment des dépôts dans des eaux naturelles ou artificielles, des limons sédimentées industrielles et de curage ou des mélanges de celles-ci.

3. Utilisation selon les revendications 1 et 2,
caractérisée en ce qu'
on met en place comme sédiment des déblais de dragage des ports et/ou des fleuves et/ou les sédiments fins séparés de ceux-ci ou la vase des ports ou des cours d'eau.

4. Elément de construction selon les revendications 1 à 3, pour le remplissage subaquatique d'eaux à tarir, en particulier de bassins de port,
caractérisé en ce qu'
il est composé d'un corps moulé (7) par pression fortement compacté, asséché dans toute la masse, homogène en sédiments éventuellement contaminés ou en sédiments fins séparés de ceux-ci, éventuellement contaminés, corps qui est entouré de tout côté d'une enveloppe d'emballage déformable, perméable à l'eau.

5. Elément de construction selon la revendication 4,
caractérisé en ce que
l'enveloppe d'emballage se compose d'un textile, de préférence d'une étoffe non tissée.

6. Elément de construction selon la revendication 4,
caractérisé en ce que
l'enveloppe d'emballage est un filtre de substance nocive, qui se compose d'un composite d'étoffes non tissées ou d'un composite de tissu et d'étoffes non tissées, dans lequel entre les deux couches de textile sont insérés un ou plusieurs matériaux absorbants et/ou adsorbants les matières nocives.

7. Elément de construction selon les revendications 5 ou 6,
caractérisé en ce que
les espaces vides ou les espaces intermédiaires entre les fibres des couches de textile sont remplis complètement ou partiellement de sédiments, de limon, d'un minéral d'argile ou des matériaux absorbants et/ou adsorbants les matières nocives.

8. Elément de construction selon la revendication 7,
caractérisé en ce que
les couches textiles intactes ou remplies sont maintenues humides, ou sont scellées avec une colle soluble dans l'eau sur la face venant à se trouver vers l'extérieur ou a pleine surface sur les deux faces.

9. Elément de construction selon les revendications 4 à 8,
caractérisé en ce que
l'enveloppe d'emballage entoure le corps moulé (7) en collant contre lui.

10. Elément de construction selon les revendications 4 à 9,
le corps moulé (7) se compose de déblais de dragage contaminés et/ou de limon contaminé séparé de ceux-ci.

11. Elément de construction selon les revendications 4 à 10,
caractérisé en ce qu'
il a la forme d'un cylindre, de préférence avec un diamètre de 1,25 m et une longueur de 5 m.

12. Procédé de fabrication des éléments de construction selon les revendications 4 à 11,
caractérisé en ce qu'
on comprime en un corps moulé (7) une masse de sédiments et/ou de sédiments fins, obtenu par pression, sous l'effet de la pression, de préférence sous un nouvel assèchement et on entoure partout le corps moulé (7) obtenu d'une enveloppe d'emballage déformable, perméable à l'eau.

13. Procédé selon la revendication 12,
caractérisé en ce que
le formage de la masse a lieu au moyen d'une presse à piston ou d'une autre presse de grande capacité opérant hydrauliquement.

14. Procédé selon les revendications 12 et 13,
caractérisé en ce qu'
on comprime le corps moulé (7) directement dans l'enveloppe d'emballage.

15. Procédé selon la revendication 12,
caractérisé en ce qu'
on produit l'enveloppe d'emballage par enroulement en spirale d'une bande d'étoffe non tissée continue et ensuite masquage des extrémités du corps moulé (7).

16. Procédé selon les revendications 12 à 15,
caractérisé en ce qu'
on soumet l'enveloppe d'emballage entourant le corps moulé (7) à un processus thermique de retrait.

17. Dispositif pour réaliser le procédé selon les revendications 12 à 16,
caractérisé en ce qu'
il est prévu une presse à piston équipée d'un appareillage pour la pose de l'enveloppe d'emballage, dont le cylindre de pressage (3) est muni d'une part d'une trémie de remplissage (2) pour la masse de sédiment ou de sédiment fin et, d'autre part, d'une pièce de réduction (4), la pièce de réduction (4) étant reliée à un tube de forme (4a).

18. Dispositif selon la revendication 17,
caractérisé en ce que
la pièce de réduction (4) est réalisée conique.

19. Dispositif selon les revendications 17 et/ou 18,
caractérisé en ce que
la pièce de réduction (4) est équipée de dispositifs pour l'évacuation de l'eau extraite.
